# EUROPÄISCHE PATENTSCHRIFT

(11) **EP 0 724 160 B1**
(45) Veröffentlichungstag und Bekanntmachung des Hinweises auf die Patenterteilung: **01.03.2000**
(21) Anmeldenummer: 95115923.5
(22) Anmeldetag: 10.10.1995
(51) Int. Cl.: G01P 3/487

(54) **Sensorring**
Annular sensor
Capteur annulaire

(30) Priorität: 26.01.1995 DE 19502367
(43) Veröffentlichungstag der Anmeldung: 31.07.1996
(73) Patentinhaber: Firma Carl Freudenberg, 69469 Weinheim (DE)
(72) Erfinder: Lannert, Berthold, D-64658 Fürth (DE); Eckel, Hans-Gerd, Dr., D-69515 Laudenbach (DE); Kober, Horst, D-69469 Weinheim (DE); Burger, Stefan, D-69469 Weinheim (DE)

(56) Entgegenhaltungen:
- EP-A- 0 081 225
- EP-A- 0 213 732
- DE-A- 3 217 827
- DE-A- 4 305 338
- PATENT ABSTRACTS OF JAPAN vol. 7, no. 96 (P-193) [1241] , 22.April 1983 & JP-A-58 022961 (MITSUBISHI DENKI K.K.), 10.Februar 1983,

## Beschreibung

Die Erfindung befaßt sich mit einem Sensorring nach dem Oberbegriff des Patentanspruchs 1.

Ein solcher Sensorring ist aus JP-A-58 022 961 oder EP 0 081 225 A1 bekannt, welcher dort als geformter Permanentmagnet ausgebildet ist und in einer zugeordneten Sensoreinrichtung eingesetzt werden kann. Der Sensorring weist ein Kunststoffmaterial auf, welches ein Gemisch aus Kunstharz und Magnetmaterial zur Erzielung der permanentmagnetischen Eigenschaften umfaßt. Daher ist seine Eigensteifigkeit und Formstabilität eingeschränkt. Hierdurch können sich Schwierigkeiten hinsichtlich einer guten Magnetsignalerzeugung beim Einsatz in einer Sensorvorrichtung ergeben.

Aus EP 0 213 732 A1 ist ein Magnetring zur Detektion der Drehverhältnisse eines Gegenstands bekannt, bei dem es sich um einen magnetischen Sensorring handelt. Ein dort vorgesehener Trägerring ist derart gestaltet, daß der eigentliche Sensorringkörper aus polymerem Werkstoff in denselben bis auf die freiliegende, die Magnetpole bildende Stirnfläche eingebettet ist. Zur Magnetisierung der Magnetpole lassen sich daher keine Leiter einsetzen, so daß man eine qualitativ minderwertige Magnetisierung der Magnetpole hat. Da die Magnetpole an der Stirnfläche freiliegen und an den axial benachbarten Endflächen von dem Trägermaterial umgeben sind, sind bedingt durch das umschließende Trägermaterial die hierbei erzeugbaren Magnetsignale abgeschwächt und relativ schwach.

Ein Sensorring aus einem Ringkörper aus polymerem Werkstoff, der an einem metallischen Trägerring festgelegt und mit einer kreisringförmigen Stirnfläche versehen ist, ist aus der DE-A-43 05 338 bekannt. Der Ringkörper weist dabei an mindestens einer Umfangsstelle gegenüber den übrigen Bereichen unterschiedliche, physikalische Eigenschaften auf, was seine Verwendung als Signalgeber ermöglicht. Die Ausbildung läßt es nicht zu, Magnetsignale hoher Qualität zu erhalten. Die Herstellung des Ringkörpers setzt außerdem die Anwendung des Mehrkomponentenspritzens voraus und ist dementsprechend aufwendig.

Der Erfindung liegt die Aufgabe zugrunde, einen Sensorring bereitzustellen, welcher bei einer vereinfachten Herstellbarkeit eine deutlich verbesserte Magnetsignalerzeugung gestattet.

Nach der Erfindung wird hierzu ein Sensorring bereitgestellt, welcher die Merkmale des Patentanspruchs aufweist.

Bei dem erfindungsgemäßen Sensorring durchdringen die Feldlinien, welche während der Magnetisierung den jeweiligen elektrischen Leiter umschließen, die Stirnflächen der Magnetpole etwa unter einem rechten Winkel. Hierdurch läßt sich die Qualität der Magnetisierung der Magnetpole wesentlich verbessern, so daß man beim Einsatz als Sensorring deutlich verbesserte Magnetsignale erzeugen kann. Durch die verstärkte Eigenstabilität des Sensorrings unter Einsatz eines Trägerrings aus metallischem Werkstoff in Verbindung mit der überraschend erzielbaren hervorragenden Qualität der Magnetisierung der Magnetpole erhält man somit einen Sensorring nach der Erfindung, der einerseits stabil und genau Magnetsignale erzeugt, und der auch wesentlich verbesserte Magnetsignale, das heißt schärfere Magnetsignale, liefert. Auch werden Abschirmeffekte durch den Trägerring hinsichtlich der Magnetisierung vermieden, da der Trägerring nur rückseitig zur Stabilisierung und Abstützung dient, während der magnetisierbare Ringkörper aus polymerem Werkstoff mit den Magnetpolen an der vom Trägerring abgewandten Stirnfläche vollkommen freiliegt. Bei einer Sensoreinrichtung mit einem Sensorring nach der Erfindung lassen sich die Sensorgenauigkeiten wesentlich verbessern und steigern. Da bei dem Sensorring ferner Nuten vorhanden sind, ergeben sich auch Einsparungen hinsichtlich der Menge des zur Herstellung benötigten, magnetisierbaren Werkstoffes.

Weitere vorteilhafte Ausgestaltungen der Erfindung sind in den Ansprüchen 2 bis 5 wiedergegeben.

Um eine möglichst ausgeglichene Magnetisierung der Stirnfläche im Bereich der Magnetpole zu erzielen, hat es sich als vorteilhaft erwiesen, wenn die Nuten auf ihrer ganzen Länge von übereinstimmendem Querschnitt sind.

Der Trägerring kann die Form einer ebenen, kreisringförmigen Scheibe haben, so daß er sich besonders einfach herstellen läßt.

Um eine noch stärkere Magnetisierung der Magnetpole zu ermöglichen, hat es sich als vorteilhaft bewährt, wenn der Trägerring in die Magnetpole eingreifende Vorsprünge aufweist.

Die Vorsprünge können beispielsweise durch einen Tiefziehprozeß erzeugt sein und soweit in Richtung der Stirnfläche vorstehen, daß sich die Nuten und die Vorsprünge, in einer Richtung parallel zur Sensorringachse betrachtet, gegenseitig überlappen. Der daraus resultierende, magnetische Rückschluß gewährleistet es, besonders hohe Feldstärken im Bereich der Magnetpole zu erzielen bei Gewährleistung eines besonders geringen Gewichts und einer großen Steifigkeit des Sensorringes.

Der für die Erzeugung des Ringkörpers verwendete, polymere Werkstoff kann irgend einer der einschlägig bekannten Werkstoffgruppen entsprechen und einen Gehalt an Bariumferrit aufweisen, was seine Magnetisierung im Anschluß an die Formgebung und Verfestigung gestattet.

Der erfindungsgemäße Sensorring läßt sich besonders einfach und kostengünstig erzeugen. Er ist dabei qualitativ so hochwertig magnetisierbar, daß sich auch im langzeitigen Gebrauch und unter rauhen Umgebungsbedingungen Signale von hoher Qualität erhalten lassen.

Die Erfindung wird nachfolgend anhand der Zeichnung weiter verdeutlicht.

Es zeigen:
Fig. 1 eine beispielhafte Ausführung eines Sensorringes in einer perspektivischen Ansicht von vorn,
Fig. 2 einen quergeschnittenen Ausschnitt aus dem Sensorring gemäß Fig. 1.

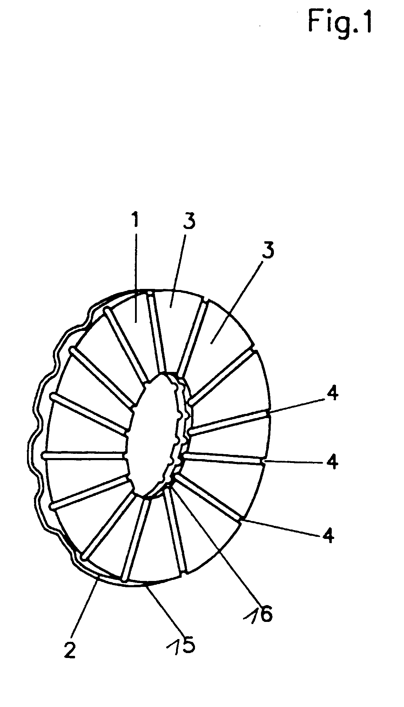

Der in Fig. 1 gezeigte Sensorring besteht aus einem Ringkörper 1 aus magnetisierten, polymeren Werkstoff, der rückseitig an einem Trägerring 2 aus einem Eisenwerkstoff festgelegt und vorderseitig durch eine kreisringförmige Stirnfläche begrenzt ist, die in Umfangsrichtung aufeinanderfolgende Magnetpole einer abwechselnden Wertigkeit aufweist. Der Ringkörper 1 besteht an allen Umfangsstellen und in sämtlichen Teilbereichen aus demselben polymeren Werkstoff. Er ist im Bereich der Stirnfläche zwischen den Magnetpolen 3 durch jeweils eine Nut 4 unterbrochen, die sich von der radial äußeren 15 bis zur radial inneren 16 Begrenzungsfläche des Ringkörpers 1 erstreckt. Die Nuten 4 sind auf ihrer ganzen radialen Länge von übereinstimmendem Querschnitt und so dimensioniert, daß die für die Magnetisierung der Magnetpole 3 benötigten, elektrischen Leiter 6 mit ihrer Mittelachse 7 in einer gedachten Ebene liegen, die die Stirnfläche 8 als kontinuierliche Fortsetzung ergänzt. Die die elektrischen Leiter 6 während der Durchführung der Magnetisierung umschließenden Feldlinien 9 durchdringen die Stirnflächen der Magnetpole dadurch unter einem rechten Winkel. Es wird angenommen, daß maßgeblich hierauf die hervorragende Qualität der Magnetisierung der Magnetpole 3 zurückzuführen ist.

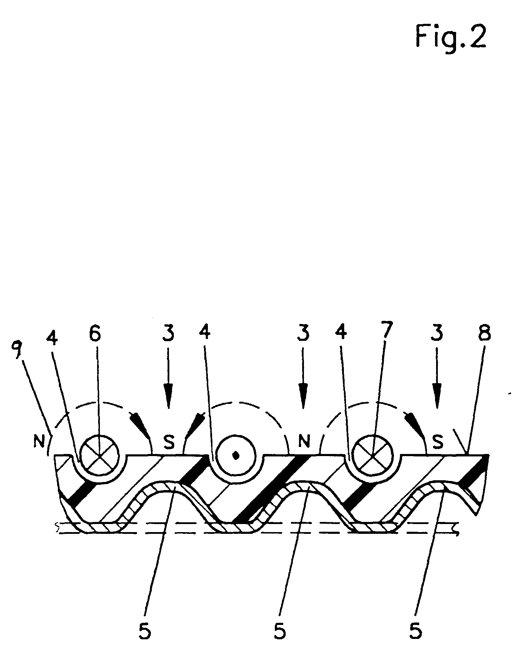

Der aus einem Eisenwerkstoff bestehende Trägerring 2 ist mit in Umfangsrichtung verteilten, in die Magnetpole 3 eingreifenden Vorsprüngen 5 versehen, die durch einen Tiefziehprozeß erzeugt und so dimensioniert sind, daß sich eine gegenseitige Überlappung mit den Nuten 4 ergibt. Hierdurch ist eine magnetischer Rückschluß der Magnetpole 3 von hoher Qualität gewährleistet, was für die Dauerhaltbarkeit von großem Vorteil ist. Der gestrichelte Teil am unteren Teil der Darstellung gemäß Fig. 2 soll verdeutlichen, daß der Trägerring 2 gegebenenfalls auch die Gestalt einer ebenen, kreisringförmigen Scheibe haben kann.

## Patentansprüche

1. Sensorring mit einem Ringkörper (1) aus polymerem Werkstoff, welcher eine kreisringförmige Stirnfläche aufweist, die in Umfangsrichtung aufeinanderfolgende Magnetpole (3) einer abwechselnden Wertigkeit aufweist, wobei der Ringkörper (1) an allen Umfangsstellen aus demselben polymeren Werkstoff besteht und die Stirnfläche zwischen den Magnetpolen (3) durch jeweils eine Nut (4) unterbrochen ist, die sich von der radial äußeren (15) bis zur radial inneren (16) Begrenzungsfläche des Ringkörpers erstreckt, **dadurch gekennzeichnet**, daß der Ringkörper (1) an einem metallischen Trägerring (2) festgelegt ist, welcher aus einem Eisenwerkstoff besteht, und daß die jeweilige Nut (4) derart dimensioniert ist, daß zur Magnetisierung der Magnetpole (3) elektrische Leiter (6) in der jeweiligen Nut (4) derart anordenbar sind, daß die Mittelachse (7) jedes elektrischen Leiters (6) in einer gedachten Ebene liegt, die eine kontinuierliche Fortsetzung der Stirnfläche (8) des Ringkörpers (1) bildet.

2. Sensorring nach Anspruch 1, **dadurch gekennzeichnet**, daß die Nuten (4) auf ihrer ganzen radialen Länge von übereinstimmendem Querschnitt sind.

3. Sensorring nach Anspruch 1 oder 2, **dadurch gekennzeichnet**, daß der Trägerring (2) in die Magnetpole (3) eingreifende Vorsprünge (5) aufweist.

4. Sensorring nach Anspruch 3, **dadurch gekennzeichnet**, daß die Vorsprünge (5) durch einen Tiefziehprozeß erzeugt sind.

5. Sensorring nach Anspruch 3 bis 4, **dadurch gekennzeichnet**, daß sich die Nuten (4) und die Vorsprünge (5), in einer Richtung parallel zur Achse des Sensorrings betrachtet, gegenseitig überlappen.

## Claims

1. A sensor ring having a ring body (1) composed of polymer material, which has an annular end surface which, in the circumferential direction, has successive magnet poles (3) of alternate polarity, the ring body (1) being composed of the same polymer material, at all circumferential points, and the end surface being interrupted by in each case one groove (4) between the magnet poles (3), which groove (4) extends from the radially outer boundary surface (15) to the radially inner boundary surface (16) of the ring body, characterised in that the ring body (1) is fixed on a metallic supporting ring (2) which is composed of a ferrous material, and in that the respective groove (4) is dimensioned in such a way that electrical conductors (6) for magnetizing the magnet poles (3) can be arranged in the respective groove (4) in such a way that the centre axis (7) of each electrical conductor (6) lies on an imaginary plane which forms an uninterrupted continuation of the end surface (8) of the ring body (1).

2. A sensor ring according to claim 1, characterized in that the grooves (4) have a matching cross section over their entire radial length.

3. A sensor ring according to claim 1 or 2, characterized in that the supporting ring (2) has projections (5) which engage in the magnet poles (3).

4. A sensor ring according to claim 3, characterized in that the projections (5) are produced by a thermoforming process.

5. A sensor ring according to claim 3 or 4, characterized in that the grooves (4) and the projections (5) overlap one another when viewed in a direction parallel to the axis of the sensor ring.

## Revendications

1. Capteur annulaire avec un corps annulaire (1) en matériau polymère, lequel présente une surface frontale en anneau de cercle, qui comporte dans le sens circonférentiel des pôles magnétiques (3) successifs de valence alternante, le corps annulaire (1) étant constitué en tous points circonférentiels du même matériau polymère et la surface frontale entre les pôles magnétiques (3) étant à chaque fois interrompue par une rainure (4) qui s'étend de la surface de délimitation radialement extérieure (15) jusqu'à la surface de délimitation radialement intérieure (16) du corps annulaire, caractérisé en ce que le corps annulaire (1) est fixé sur un support annulaire (2) métallique, lequel est constitué d'un matériau ferreux et en ce que chaque rainure (4) est dimensionnée de telle sorte que pour la magnétisation des pôles magnétiques (3), des conducteurs électriques (6) puissent être disposés dans chaque rainure (4), de telle sorte que l'axe médian (7) de chaque conducteur électrique (6) se situe dans un plan imaginaire formant un prolongement continu de la surface frontale (8) du corps annulaire (1).

2. Capteur annulaire selon la revendication 1, caractérisé en ce que les rainures (4) sont de section correspondante sur toute leur longueur radiale.

3. Capteur annulaire selon la revendication 1 ou 2, caractérisé en ce que le support annulaire (2) présente des saillies (5) s'engrenant dans les pôles magnétiques (3).

4. Capteur annulaire selon la revendication 3, caractérisé en ce que les saillies (5) sont obtenues par un processus d'emboutissage.

5. Capteur annulaire selon la revendication 3 ou 4, caractérisé en ce que les rainures (4) et les saillies (5), vues dans une direction parallèle à l'axe du capteur annulaire, se recouvrent mutuellement.
